(19) Europäisches Patentamt
European Patent Office
Office européen des brevets

(11) Veröffentlichungsnummer: **0 135 802**
**B1**

(12) # EUROPÄISCHE PATENTSCHRIFT

(45) Veröffentlichungstag der Patentschrift: **17.11.88**

(51) Int. Cl.⁴: **C 08 L 69/00**, C 08 L 51/04, C 08 L 25/08, C 08 L 71/02

(21) Anmeldenummer: **84110006.8**

(22) Anmeldetag: **22.08.84**

(54) **Thermoplastische Formmasse.**

(30) Priorität: **30.08.83 DE 3331155**

(43) Veröffentlichungstag der Anmeldung: **03.04.85 Patentblatt 85/14**

(45) Bekanntmachung des Hinweises auf die Patenterteilung: **17.11.88 Patentblatt 88/46**

(84) Benannte Vertragsstaaten: **BE DE FR GB NL**

(56) Entgegenhaltungen:
**EP - A - 0 061 692**
**DE - A - 2 901 576**
**DE - A - 3 149 812**

(73) Patentinhaber: **BASF Aktiengesellschaft, Carl-Bosch-Strasse 38, D-6700 Ludwigshafen (DE)**

(72) Erfinder: **Mitulla, Konrad, Dr., An der Froschlache 23, D-6700 Ludwigshafen (DE)**
Erfinder: **Ruppmich, Karl, Koenigsbacher Strasse 134, D-6700 Ludwigshafen (DE)**
Erfinder: **Echte, Adolf, Dr., Leuschnerstrasse 42, D-6700 Ludwigshafen (DE)**
Erfinder: **Swoboda, Johann, Dr., Neuwiesenstrasse 28, D-6700 Ludwigshafen (DE)**

**EP 0 135 802 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft thermoplastische Formmassen auf der Grundlage von Styrol- und Acrylnitril enthaltenden, mit Kautschuken schlagzäh modifizierten Polymerisaten und Polycarbonaten.

Zum Stand der Technik nennen wir:

1. DE-OS 3 149 812
2. EP-A-61 692
3. FR-PS 1 239 902
4. DE-AS 1 297 341

Mischungen von Styrol- und Acrylnitril enthaltenden schlagzähen Polymerisaten mit Polycarbonaten sind beispielsweise in (1) beschrieben.

Aus (2), (3) und (4) ist die Verwendung von Ethylenoxid-Propylenoxid-Blockcopolymerisaten für die antistatische Ausrüstung von Polymeren beschrieben.

Insbesondere weisen die aus (1) bekannten Mischungen verzweigte Polycarbonate auf. Die daraus hergestellten Formmassen weisen gegenüber Formmassen, die nicht verzweigte Polycarbonate enthalten, eine verbesserte Verarbeitungsbreite auf.

In (2) ist insbesondere die antistatische Ausrüstung von polycarbonatfreien Formmassen auf Basis von ggf. schlagfestmodifizierten Styrol und/oder α-Methylstyrol und Acrylnitril enthaltenden Copolymerisaten beschrieben. Als Antistatikum wird ein mit SAN gepfropfter Polyhydroxipolyalkylenpolyether verwendet, der mit den Copolymerisaten der Hartmatrix verträglich ist und der zu keiner Belagsbildung an der Oberfläche von Formstücken und zu keinem ungünstigen Verarbeitungsverhalten führt.

Die bekannten Formmassen weisen in bezug auf die Bindenahtfestigkeit und Entformungskraft noch Nachteile auf.

Es bestand die Aufgabe, die Bindenahtstärke und die Entformungskraft von Formteilen aus Mischungen von Polycarbonat und Mischpolymerisaten, z. B. ABS, ASA und AES, zu verbessern.

Diese Aufgabe wird erfindungsgemäss dadurch gelöst, dass den schlagzäh modifizierten Acrylnitril-Styrol- und Polycarbonat-Mischungen lineare Homopolymerisate bestimmten Aufbaus und bestimmten Molekulargewichts in einer Menge von 0,1 bis 3, vorzugsweise 0,3 bis 1,5 Gew.%, bezogen auf die Mischung aus Polycarbonat und das schlagzäh modifizierte Copolymerisat, zugegeben werden.

Die Erfindung betrifft somit Thermoplastische Formmassen, enthaltend (vorzugsweise bestehend aus)

A) 10 bis 90 Gew.%, bezogen auf A + B, mindestens eines Polycarbonates,

B) 90 bis 10 Gew.%, bezogen auf A + B, mindestens eines Mischpolymerisates, das gebildet wird aus

$b_1$) mindestens einem, gegebenenfalls vernetzten, Elastomeren mit einer Glastemperatur unterhalb 0 °C in einem Anteil von 1 bis 40 Gew.-%, bezogen auf B, das aufgebaut ist aus mindestens einem der Monomeren aus der Gruppe der konjugierten Diene mit 4 bis 5 C-Atomen, der (Meth)acrylsäurealkylester mit 1 bis 8 C-Atomen im Alkylrest, der vinylaromatischen Monomeren mit 6 bis 12 C-Atomen
oder von Ethylen, Propylen und einem nicht konjugierten Dien,
worauf,

$b_2$) 5 bis 40 Gew.%, bezogen auf B, mindestens ein Copolymerisat aufgepfropft ist, das aufgebaut ist aus mindestens einem vinylaromatischen Monomeren und mindestens einem (nichtaromatischen) ethylenisch ungesättigten Monomeren im Gewichtsverhältnis 90 : 10 bis 60 : 40 und wobei das Produkt der Pfropfmischpolymerisation eine mittlere Teilchengrösse von 0,200–1,0 µm ($d_{50}$-Wert) der integralen Masseverteilung aufweist,
und

$b_3$) mindestens einem Copolymerisat (Hartmatrix), in einem Anteil von 20 bis 94 Gew.%, bezogen auf B,
das besteht aus
50–90 Gew.%, bezogen auf $b_3$), mindestens einem vinylaromatischen Monomeren
und
10–50 Gew.%, bezogen auf $b_3$), mindestens eines (nichtaromatischen) ethylenisch ungesättigten Monomeren

enthaltend gegebenenfalls

C) übliche Zusatzstoffe. Die Formmasse ist dadurch gekennzeichnet, dass sie zusätzlich wenigstens ein Homopolymerisat D der Formel

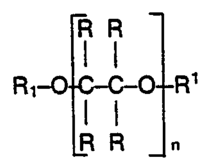 oder

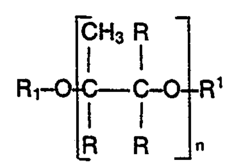

oder Mischungen davon in einem Anteil von 0,1 bis 3,0 Gew.%, bezogen auf A + B, enthält, wobei die Indices und Reste stehen für:

n = ganze Zahlen von 9 bis 200
R = H, F, Cl
$R^1$ = H oder Alkylrest mit 1–22 C-Atomen.

Nachstehend wird der Aufbau der Formmasse aus den Komponenten A bis D, deren Herstellung und die Herstellung der Formmasse, beschrieben:

Die Formmasse enthält die Komponenten A, B und D und gegebenenfalls die Zusatzstoffe C; vorzugsweise besteht die erfindungsgemässe Formmasse aus A, B und D.

Komponente A:

Unter Polycarbonaten A im Sinne der erfindungsgemässen Formmasse sollen aromatische Polycarbonate auf der Basis von Homopolycarbonaten und Copolycarbonaten verstanden werden.

Als Bisphenole kommen dabei beispielsweise in Frage: Dihydroxydiphenyle, Bis-(hydroxyphenyl)alkane, Bis-(hydroxyphenyl)ether. Es können aber auch alle anderen, für die Herstellung von Polycarbonaten geeigneten Bisphenole eingesetzt werden, wie sie u.a. in der Monographie H. Schnell, Chemistry and Physics of Polycarbonates, Interscience Publishers, New York, 1964, in der US-PS 2 999 835 und in der DE-OS 2 248 817 beschrieben sind. Besonders bevorzugt sind Polycarbonate auf der Basis von 2,2-Bis-(4-hydroxyphenyl)-propan. Die Synthese der Polycarbonate wird beispielsweise in der US-PS 2 999 835 und der GB-PS 772 627 beschrieben. Von der Komponente A werden 10 bis 90 Gew.%, insbesondere 30 bis 80 Gew.%, jeweils bezogen auf die Formmasse aus A und B, angewendet.

Komponente B

Die thermoplastische Formmasse gemäss vorliegender Erfindung enthält die Komponente B in einem Anteil von 10 bis 90 Gew.%, insbesondere in einem Anteil von 70 bis 20 Gew.%, jeweils bezogen auf A+B. Der Aufbau der Komponente B der Formmasse ist dreiteilig. Die Komponente B der erfindungsgemässen Formmasse weist als Komponente $b_1$, ein Elastomeres, in einem Anteil von 1 bis 40 Gew.%, insbesondere von 10 bis 30 Gew.%, jeweils bezogen auf B auf. Auf diesem Elastomeren, d.h. einem Kautschuk, der eine Glastemperatur unterhalb von 0 °C, insbesondere unterhalb von −30 °C aufweist, ist ein Copolymerisat $b_2$ aufgepfropft, das einen Anteil von 5 bis 40 Gew.%, insbesondere von 5 bis 30 Gew.%, jeweils bezogen auf B ausmacht. Die Summe aus $b_1$ und $b_2$, im nachfolgenden Text auch gelegentlich als Pfropfmischpolymerisat, d.h. als Ergebnis der Pfropfung bezeichnet, macht noch nicht die gesamte Komponente B aus. Die Komponente B enthält zusätzlich zu den Komponenten $b_1$ und $b_2$ noch mindestens ein Copolymerisat $b_3$ (Hartmatrix) in einem Anteil von 20 bis 94 Gew.%, insbesondere von 40 bis 85 Gew.%, jeweils bezogen auf B. Dieses Copolymerisat stellt zusammen mit der Komponente A eine gemeinsame Hartmatrix der Formmasse dar, in der das Pfropfmischpolymerisat gleichmässig verteilt ist.

Nachstehend wird der Aufbau der Komponenten $b_1$ bis $b_3$ des Mischpolymerisates B beschrieben.

Aufbau von $b_1$

Das Elastomere $b_1$ kann aufgebaut sein aus (Co)Polymerisaten konjugierter Diene mit 4 bis 5 C-Atomen, insbesondere von Butadien-1,3 und Isopren; bevorzugt ist die Verwendung von Butadien alleine. Ferner kommen in Betracht diese Ester der Acryl- bzw. Methacrylsäure, die 1 bis 8 C-Atome im Alkylrest aufweisen. Von diesen Estern wird bevorzugt Butylacrylat bzw. das Ethylhexylacrylat. Ferner kommen Elastomere, die auf Basis von EPDM-Kautschuken, d.h. eines Terpolymerisates aus Ethylen, Propylen und einem nicht konjugierten Dien aufgebaut sind, in Betracht. Als nichtkonjugierte Diene für den Aufbau dieser Terpolymerisate sind bevorzugt Dicyclopentadienhexadien-1,4 und 5-Ethylidenborbonen, Tricyclopentadien, -heptadien, -octadien usw. Das Gewichtsverhältnis Ethylen/Propylen in diesen Terpolymerisaten liegt bevorzugt im Bereich von 75 bis 25 bis 40 : 60. Das Dien ist in solchen Mengen und in solcher Form im Terpolymerisat eingebaut, dass Jodzahlen von 2 bis 30 resultieren. Dies entspricht etwa 1 bis 15 C-C-Doppelbindungen pro 1000 C-Atome. Die Monomerbausteine können dabei statistisch oder in Blöcken angeordnet sein. Die Herstellung von EPDM-Kautschuken ist dem Fachmann bekannt. Auch sind derartige Kautschuke, ebenso wie die vorstehend genannten Butadienkautschuke und Acrylatkautschuke im Handel erhältlich. Die Money-Elastizitäten $ML_4$ bei 100 °C liegen im Bereich von 20 bis 90 für die genannten EPDM-Kautschuke. Als Elastomere $b_1$ können anstelle der vorstehend genannten Homo- bzw. Terpolymerisate auch Copolymerisate, insbesondere Copolymerisate konjugierter Diene mit Alkylestern und auch Copolymerisate von Dienen mit vinylaromatischen Monomeren, wobei diese vinylaromatischen Monomeren 6 bis 12 C-Atome aufweisen, angewendet werden. Als vinylaromatische Monomere für die genannten Kautschuke werden insbesondere Styrol und dessen Allyl-Derivate, wie p-Methylstyrol und α-Methylstyrol angewendet.

Insbesondere werden jedoch Copolymerisate aus Butadien und Styrol üblicher Zusammensetzung (70/30) in den dem Fachmann bekannten Mengen angewendet.

Von den genannten Homo- oder Copolymerisaten werden ganz bevorzugt die Kautschuke auf Basis von konjugierten Dienen, und insbesondere von Butadien-1,3 angewendet. Um witterungsbeständigere Formmassen zu erhalten, werden Copolymerisate von konjugierten Dienen und von Acrylsäureestern bzw. nur Acrylatkautschuke angewendet. Auch die Anwendung von Terpolymerisaten, wie EPDM-Kautschuke, als Pfropfgrundlage liefert witterungsbeständigere Produkte.

Die elastomere Komponente $b_1$ kann gegebenenfalls vernetzt sein, d.h. bei der Herstellung derselben werden übliche polyfunktionelle Monomere, wie Divinyl-, Diacryl- und Diallylverbindungen in den dem Fachmann bekannten Mengen angewendet. Bevorzugt werden die Acrylatkautschuke unter Verwendung von Vernetzungsmitteln, wie Butandioldiacrylat und insbesondere Tricyclodecenylacrylat hergestellt.

Aufbau von $b_2$

Das Copolymerisat $b_2$, d.h. die Pfropfhülle, ist aufgebaut aus mindestens je einem Monomeren aus zwei unterschiedlichen Gruppen.

Die erste Gruppe stellt vinylaromatische Monomere dar, insbesondere kommen hierbei in Betracht das Styrol, sowie die Alkylderivate, von denen das α-Methylstyrol bzw. p-Methylstyrol hervorgehoben seien. Besonders bevorzugt wird das Styrol angewendet. Um wärmeformbeständigere Massen zu erhalten, können Mischungen aus Styrol und den Allylderivaten oder ausschliesslich

das α-Methylstyrol und insbesondere das p-Methylstyrol angewendet werden.

Die zweite Komponente für den Aufbau des Copolymerisates $b_2$ stellt ein (nichtaromatisches, ethylenisch ungesättigtes Monomeres dar. Als solche (nichtaromatische) ethylenisch ungesättigte Monomere kommen in Betracht, insbesondere die Derivate der Acrylsäure und Methacrylsäure. Genannt seien die Ester der Acrylsäure und der Methacrylsäure mit 1 bis 8 C-Atomen im Alkylrest sowie das Acrylnitril und das Methacrylnitril. Bevorzugt wird das (Meth)acrylnitril verwendet. Die vorstehend genannten vinylaromatischen Monomeren und die nicht aromatischen ethylenisch ungesättigten Monomeren werden im Gewichtsverhältnis von 60:40 bis 90:10 angewendet. Das Ergebnis der Herstellung des Copolymerisates in Gegenwart des Elastomeren $b_1$ ist ein Pfropfmischpolymerisat, bei der das Copolymerisat in dem Fachmann bekannten Grenzen auf das Elastomere gepfropft wird. Die Herstellung der Pfropfhülle kann dabei gegebenenfalls in 2 Stufen erfolgen, wobei in der ersten Stufe der Pfropfung 5 bis 50 Gew.%, vorzugsweise 20 bis 40 Gew.% lediglich des vinylaromatischen Monomeren und in der zweiten Stufe die restliche Menge des vinylaromatischen Monomeren und die Gesamtmenge des (nichtaromatischen) ethylenisch ungesättigten Monomeren, d.h. 30 bis 100 Gew.%, angewendet werden.

Das Copolymerisat $b_2$ soll unabhängig davon, ob es in ein oder zwei Stufen hergestellt wird, 90 bis 60 Gew.% vinylaromatische Monomere und 40 bis 10 Gew.% (nichtaromatische) ethylenisch ungesättigte Monomere, jeweils bezogen auf $b_2$, aufweisen. Bevorzugt ist die Pfropfhülle aus 85 bis 60 Gew.% Styrol und 15 bis 40 Gew.% AN aufgebaut.

Sowohl das Elastomere als auch das Pfropfmischpolymerisat werden bevorzugt in Emulsion hergestellt, und können nach den üblichen Methoden einer Teilchenvergrösserung unterzogen werden. Das Pfropfmischpolymerisat soll Teilchen im Bereich von 0,2 bis 1,0 µm ($d_{50}$-Wert der integralen Masseverteilung) aufweisen.

Aufbau von $b_3$

Die Komponente $b_3$, das Copolymerisat, ist eine nicht elastomere Hartkomponente, die aus mindestens einem vinylaromatischen Monomeren und mindestens einem (nichtaromatischen) ethylenisch ungesättigten Monomeren aufgebaut ist.

Als vinylaromatische Monomere, die in einer Menge von 50 bis 90 Gew.%, insbesondere von 65 bis 80 Gew.%, bezogen auf $b_3$, angewendet werden, kommen in Betracht: Styrol und seine Derivate, insbesondere die Alkylderivate, wie α-Methylstyrol bzw. p-Methylstyrol. Bevorzugt werden das Styrol und falls wärmeformbeständigere Formmassen angestrebt werden, die Alkylderivate angewendet.

Das nicht aromatische ethylenisch ungesättigte Monomere wird in einer Menge von 10 bis 50 Gew.%, insbesondere von 20 bis 35 Gew.%, bezogen auf $b_3$, angewendet. Als Monomere kommen in Betracht die Derivate der Acryl- und Methacrylsäure, insbesondere die Ester von Alkoholen mit 1 bis 8 C-Atomen im Alkylrest, sowie die Nitrile. Von den Nitrilen sind das Acrylnitril und das Methacrylnitril bevorzugt.

Herstellung des Pfropfmischpolymerisates ($b_1 + b_2$)

Das erfindungsgemäss einzusetzende Pfropfmischpolymerisat ($b_1 + b_2$) kann im Handel bezogen werden oder es kann beispielsweise nach der in der DE-PS 1 260 135 beschriebenen Methode hergestellt werden.

Hierzu wird zunächst die Pfropfgrundlage, das Elastomere $b_1$, hergestellt, indem das oder die Kautschukmonomeren und das polyfunktionelle, die Vernetzung bewirkende, Monomere (gegebenenfalls zusammen mit weiteren Comonomeren) in wässriger Emulsion in an und für sich bekannter Weise bei Temperaturen zwischen 20 und 100 °C, vorzugsweise zwischen 50 und 80 °C polymerisiert werden. Es können die üblichen Emulgatoren, wie Alkalisalze von Alkyl- oder Alkylarylsulfonsäuren, Alkylsulfate, Fettalkoholsulfonate, Salze höherer Fettsäuren mit 10 bis 30 Kohlenstoffatomen oder Harzseifen, verwendet werden. Vorzugsweise nimmt man die Natriumsalze von Alkylsulfonaten oder Fettsäuren mit 10 bis 18 Kohlenstoffatomen. Es ist günstig, die Emulgatoren in Mengen von 0,5 bis 5 Gew.%, insbesondere von 0,8 bis 2 Gew.%, bezogen auf die bei der Herstellung der Pfropfgrundlage $b_1$ eingesetzten Monomeren, einzusetzen. Im allgemeinen wird bei einem Wasser- zu Monomeren-Verhältnis von 2:1 bis 0,7:1 gearbeitet. Als Polymerisationsinitiatoren dienen insbesondere die gebräuchlichen Persulfate, wie z.B. Kaliumpersulfat, es können jedoch auch Redox-Systeme zum Einsatz gelangen. Die Initiatoren werden im allgemeinen in Mengen von 0,1 bis 1 Gew.%, bezogen auf die bei der Herstellung des Elastomeren $b_1$ eingesetzten Monomeren, eingesetzt. Als weitere Polymerisationshilfsstoffe können die üblichen Puffersubstanzen, durch welche pH-Werte von vorzugsweise 6 bis 9 eingestellt werden – z.B. Natriumbicarbonat und Natriumpyrophosphat –, sowie 0 bis 3 Gew.% eines Molekulargewichtsreglers – wie Mercaptane, Terpinole oder dimeres α-Methylstyrol – bei der Polymerisation verwendet werden.

Die genauen Polymerisationsbedingungen, insbesondere Art, Dosierung und Menge des Emulgators, werden innerhalb der oben angegebenen Bereiche im einzelnen so bestimmt, dass der erhaltene Latex des gegebenenfalls vernetzten Kautschuk-Polymerisats einen $d_{50}$-Wert im Bereich von 0,2 bis 1,0 µm, vorzugsweise im Bereich von 0,25 bis 0,7 µm besitzt. Verteilung 2 liegt im Bereich von 2 bis 0,5, insbesondere 1,5 bis 1,0.

Die genannten mittleren Teilchengrössen gelten sowohl für das Elastomere ($b_1$) als auch für das Pfropfmischpolymerisat ($b_1 + b_2$).

Zur Herstellung des Pfropfmischpolymerisats $b_1 + b_2$ wird dann im nächsten Schritt in Gegenwart des so erhaltenen Latex $b_1$ gepfropft. Je nach der Art des verwendeten Elastomeren wird diese

Pfropfung in einer Stufe (z.B. für Dienkautschuke, EPDM oder Dien/Styrol-Kautschuke) oder in 2 Stufen, z.B. bevorzugt für Acrylatkautschuke durchgeführt. Im Falle z.B. der Acrylatkautschuke wird zur Herstellung der Pfropfhülle zuerst ein vinylaromatisches Monomeres ($b_2a_1$) mit bis zu 12 Kohlenstoffatomen polymerisiert. Beispiele für solche Monomere sind Styrol, α-Methylstyrol und kernalkylierte Styrole, wie p-Methylstyrol und tert.-Butylstyrol. Besonders bevorzugt werden Styrol, α-Methylstyrol und p-Methylstyrol eingesetzt. Es ist vorteilhaft, diese Pfropfmischpolymerisation von Styrol ($b_2a_1$) auf das als Pfropfgrundlage dienende, z.B. vernetzte Acrylester-Polymerisat ($b_1$) wieder in wässriger Emulsion unter den üblichen, oben aufgeführten Bedingungen durchführen. Die Pfropfmischpolymerisation kann zweckmässig im gleichen System erfolgen wie die Emulsionspolymerisation zur Herstellung der Pfropfgrundlage ($b_1$), wobei, falls notwendig, weiterer Emulgator und Initiator zugegeben werden kann. Das aufzupfropfende Styrol kann dem Reaktionsgemisch auf einmal, absatzweise in mehreren Stufen oder vorzugsweise kontinuierlich während der Polymerisation zugegeben werden. Die Pfropfmischpolymerisation des Styrols in Gegenwart des z.B. vernetzten Acrylsäureester-Polymerisats wird so geführt, dass ein Pfropfgrad von 2,5 bis 25 Gew.%, vorzugsweise von 10 bis 20 Gew.%, im Pfropfmischpolymerisat ($b_1+b_2$) resultiert. In einer zweiten Stufe wird dann die Pfropfmischpolymerisation mit einem Monomerengemisch ($b_2a_2$) aus einem vinylaromatischen Monomeren und einem nicht aromatischen ethylenisch ungesättigten Monomeren, die bereits bei der ersten Pfropfstufe eingesetzten Monomeren, insbesondere Styrol, α-Methylstyrol und p-Methylstyrol. Beispiele für copolymerisierbare, ethylenisch ungesättigte Monomere sind Acrylnitril, (Meth)-Acrylsäurealkylester mit 1–4 Kohlenstoffatomen im Alkylrest, Acrylsäure, Maleinsäureanhydrid, Acrylamid und/oder Vinylmethylether. Besonders bevorzugt werden Acrylnitril, Ethylacrylat, Methylmethacrylat und Gemische aus diesen. Als besonders bevorzugte Monomeren-Gemische werden vor allem Styrol und Acrylnitril, α-Methylstyrol oder p-Methylstyrol und Acrylnitril und Styrol, Acrylnitril und Methylmethacrylat eingesetzt. Auch der zweite Schritt der Pfropfmischpolymerisation wird zweckmässigerweise im gleichen System durchgeführt, dabei kann, falls notwendig, weiterer Emulgator und Initiator zugegeben werden. Das bevorzugt aufzupfropfende Monomeren-Gemisch aus z.B. Styrol und Acrylnitril kann dem Reaktionsgemisch auf einmal, absatzweise in mehreren Stufen oder vorzugsweise kontinuierlich während der Polymerisation zugegeben werden. Die Pfropfmischpolymerisation des Gemisches von Styrol und Acrylnitril in Gegenwart des z.B. vernetzten Acrylsäureester-Polymerisats wird so geführt, dass ein Pfropfgrad von 10 bis 45 Gew.%, vorzugsweise von 15–40 Gew.%, im Pfropfmischpolymerisat (B) resultiert.

Zusätzlich zu dem Pfropfmischpolymerisat ($b_1$ und $b_2$) enthält das Mischpolymerisat B als weitere Komponente ($b_3$) eine Hartkomponente aus einem oder mehreren Copolymerisaten von Styrol und/oder α-Methylstyrol mit Acrylnitril. Der Acrylnitril-Gehalt in diesen Copolymerisaten der Hartkomponente ($b_3$) soll 20 bis 40 Gew.%, bezogen auf das jeweilige Copolymerisat der Hartkomponente, betragen. Zu dieser Hartkomponente ($b_3$) zählen auch die bei der Pfropfmischpolymerisation zur Herstellung von ($b_1+b_2$) entstehenden freien, nicht gepfropften Styrol/Acrylnitril-Copolymerisate. Je nach den bei der Pfropfmischpolymerisation für die Herstellung des Pfropfmischpolymerisats gewählten Bedingungen kann es möglich sein, dass bei der Pfropfmischpolymerisation schon ein hinreichender Anteil an Hartkomponente ($b_3$) gebildet worden ist. Im allgemeinen wird es jedoch nötig sein, die bei der Pfropfmischpolymerisation erhaltenen Produkte mit zusätzlicher, separat hergestellter Hartkomponente ($b_3$) abzumischen.

Bei dieser zusätzlichen, separat hergestellten Hartkomponente ($b_3$) kann es sich um ein Styrol/Acrylnitril-Copolymerisat, ein α-Methylstyrol/Acrylnitril-Copolymerisat, ein Styrol/Methylmethacrylat-Copolymerisat, ein Styrol/Maleinsäureanhydrid-Copolymerisat oder ein α-Methylstyrol/Styrol/Acrylnitril-, ein Styrol/Acrylnitril/Methylmethacrylat-, ein Styrol/Acrylnitril/Maleinsäureanhydrid oder ein Styrol/Acrylnitril/Acrylsäure-Terpolymerisat, bzw. ein α-Methylstyrol/Styrol/Acrylnitril-Terpolymerisat handeln. Diese Copolymerisate können einzeln oder auch in Mischung miteinander für die Hartkomponente eingesetzt werden, so dass es sich bei der zusätzlichen, separat hergestellten Hartkomponente ($b_3$) der erfindungsgemässen Mischungen beispielsweise um eine Mischung aus einem Styrol/Acrylnitril-Copolymerisat und einem α-Methylstyrol/Acrylnitril-Copolymerisat handeln kann. In dem Fall, in dem die Hartkomponente ($b_3$) der erfindungsgemässen Massen aus einer Mischung von einem Styrol/Acrylnitril-Copolymerisat und einem α-Methylstyrol/Acrylnitril-Copolymerisat besteht, soll der Acrylnitril-Gehalt der beiden Copolymerisate tunlichst nicht mehr als 10 Gew.%, vorzugsweise nicht mehr als 5 Gew.%, bezogen auf das Copolymerisat, voneinander abweichen.

Die Hartkomponente ($b_3$) der erfindungsgemässen Massen kann jedoch auch nur aus einem einzigen Styrol/Acrylnitril-Copolymerisat bestehen, nämlich dann, wenn zur Herstellung der Pfropfmischpolymerisate als auch zur Herstellung der zusätzlichen, separat hergestellten Hartkomponenten von dem gleichen Monomer-Gemisch aus Styrol und Acrylnitril ausgegangen wird.

Die zusätzliche, separat hergestellte Hartkomponente ($b_3$) kann nach den herkömmlichen Methoden erhalten werden. So kann die Copolymerisation des Styrols und/oder α-Methylstyrols mit dem Acrylnitril in Masse, Lösung, Suspension oder wässriger Emulsion durchgeführt werden. Die Hartkomponente ($b_3$) hat vorzugsweise eine Viskositätszahl von 40 bis 100, insbesondere von 50 bis 80.

Komponente C

Die erfindungsgemässen Formmassen enthalten gegebenenfalls als weitere Komponente (C) Zusatzstoffe oder Mischungen davon, wie sie für ABS-, ASA- und AES-Polymerisate und Polycarbonate gebräuchlich sind. Als solche Zusatzstoffe seien beispielsweise genannt: Füllstoffe, weitere Polymere, Farbstoffe, Pigmente, Antistatika, Antioxidantien, Flammschutzmittel und Schmiermittel. Die Zusatzstoffe werden in üblichen und wirksamen Mengen, vorzugsweise in Mengen von 0,1 bis zu insgesamt etwa 30 Gew.%, bezogen auf die Mischung aus (A+B+C) eingesetzt.

Komponente D

Als Komponente D der erfindungsgemässen Formmassen kommen Homopolymerisate des Ethylenoxids oder Propylenoxids, die gegebenenfalls in der Hauptkette mit Fluor- oder Cl-Atomen substituiert sein können, in Betracht. Die genannten Polyether tragen OH-Gruppen am Ende, können jedoch auch mit den üblichen Alkoholen verethert sein, z.B. mit aliphatischen oder cycloaliphatischen, geradkettigen oder verzweigten Alkoholen mit z.B. 1 bis 12 C-Atomen. Bevorzugt werden übliche, feile Alkohole, die bei techn. Synthesen anfallen, z.B. $CH_3OH$, $C_2H_5OH$, die Propanole, Butenole und 2-Ethylhexanol.

Die Homopolymerisate sind im Handel unter den Warenzeichen ®Pluriole E [1)] für Ethylenoxid- oder ®Pluriol P [1)] für Propylenoxidpolymerisat erhältlich. Fluorierte Ethylenoxidpolymerisate sind unter dem Namen ®Fomblin [2)], ®Galden [2)] oder ®Krytox [3)] im Handel.

1) BASF Aktiengesellschaft

2) Montefluos SpA., Mailand/Italien

3) Dupont, U.S.A.

Die genannten Homopolymerisate werden durch die folgenden allgemeinen Formeln beschrieben:

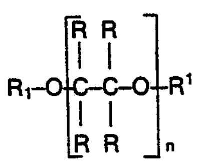

oder

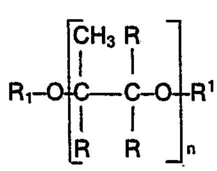

wobei die Indices stehen für

n = ganze Zahlen von 9 bis 200, vorzugsweise von 10 bis 100, entsprechend mittleren relativen Molgewichten von 200 bis 9000

R = H, F, Cl, worin R = H bevorzugt ist,

$R^1$ = H oder Alkylrest mit 1 bis 22 C-Atomen.

Die genannten Polyether können auch in Mischung miteinander angewendet werden, wodurch verschiedene Grade der Hydrophilie einstellbar sind.

Sie werden in Mengen von 0,1 bis 3,0 Gew.%, bevorzugt in Mengen von 0,3 bis 1,5 Gew.%, jeweils bezogen auf A und B, angewendet. In den Grenzen von 0,5 bis 1 Gew.% entfalten diese Bestandteile ihre volle Wirksamkeit in bezug auf die Verarbeitungseigenschaften der Formmasse, und die Bindenahffestigkeit von Formteilen daraus und beeinträchtigten die Mechanik der Formmasse praktisch nicht. Bei höheren Anteilen, beginnend ab etwa 3 Gew.% sinkt der Vicatwert und die Zähigkeit.

Die Herstellung der Homopolymerisate erfolgt in an sich bekannter Weise (N. Schönfeldt, Grenzflächenaktive Ethylenoxid-Addukte, Wissenschaftliche Verlagsgesellschaft mbH, Stuttgart, 1976, S. 53) durch Polymerisation.

Es ist bevorzugt, Homopolymerisate des Ethylenoxids oder Propylenoxids, die keine Substituenten tragen, zu verwenden.

Das Einarbeiten des Bestandteils D in die Komponenten A oder B der Formmasse kann auf allen dem Fachmann bekannten Wegen durchgeführt werden.

Herstellung der Formmasse

Die Herstellung der erfindungsgemässen Formmasse kann durch Mischen der Komponenten A, B, D und der Zusatzstoffe nach bekannten Verfahren erfolgen. Dafür können bekannte Mischaggregate verwendet werden. Vorzugsweise geschieht das Mischen der Komponenten (A), (B), (C) und (D) durch gemeinsames Extrudieren, Kneten oder Verwalzen der Komponenten.

Es können auch einzelne Komponenten der Formmasse zu Teilmischungen vorgemischt und diese Teilmischungen innig, z.B. in Knetern oder unter Erwärmung einer Teilmischung in Extrudern vermischt werden.

So können insbesondere die Komponente A und die Hartmatrix der Komponente B, d.h. $b_3$, gemischt werden; in einem Extruder wird in eine Schmelze dieser Mischung dann das Pfropfmischpolymerisat ($b_1+b_2$) und die Komponente C, gegebenenfalls mit den Zusatzstoffen D, z.B. trocken vorgemischt, eingeführt.

Die genannten Methoden sind insbesondere anwendbar wenn als Komponenten der Formmasse übliche Handelsprodukte angewendet werden.

Es kann sich jedoch als vorteilhaft erweisen, die in wässriger Dispersion erhaltenen Produkte der Pfropfmischpolymerisation [Komponente $b_1+b_2$] teilweise zu entwässern oder direkt als Dispersion mit dem Polycarbonat A, dem Copolymerisat $b_3$ und den Komponenten C und D zu vermischen, wobei dann während des Vermischens die vollständige Trocknung der Pfropfmischpolymerisate erfolgt.

Die erfindungsgemässen Formmassen können nach den bekannten Verfahren der Thermoplastverarbeitung bearbeitet werden, also z.B. durch Extrudieren, Spritzgiessen, Kalandrieren, Hohlkörperblasen, Pressen oder Sintern; besonders bevorzugt werden aus den nach dem erfindungsgemässen Verfahren hergestellten Formmassen Formteile durch Spritzgiessen für den Automobilbau hergestellt.

Die in den Beispielen und Vergleichsversuchen aufgeführten Produkteigenschaften wurden wie folgt gemessen:

1. Die Entformungsversuche wurden auf einer Spritzgussmaschine Typ Ahrberg 320 E mit Hilfe eines speziellen Werkzeugs durchgeführt. Hierbei wurde über Druckaufnehmerentformungskraft in (N) beim Abschieben einer Hülse vom Werkzeug gemessen.

2. Die Prüfung der Bindenaht erfolgte an einer Probe eines zweifach angespritzten zylindrischen Stabes mit Zusammenflussstelle der Schmelze in der Mitte des Messbereichs. Die Bindenahtfestigkeit wurde dadurch ermittelt, dass die Schlagzähigkeit ($a_n$) dieses Stabes gemessen.

3. Die Bestimmung der Viskositätszahl erfolgt bei 23 °C analog DIN 53 726 für die Hartmatrix der Komponente B, d.h. für $b_3$; dabei werden 0,5 g Material in 100 ml Dimethylformamid gelöst.

Von den Polycarbonaten wurde die Grenzviskosität in dl/g bei 25 °C in Methylenchlorid gemessen.

4. Bei den mittleren Teilchengrössen handelt es sich in allen Fällen um das Gewichtsmittel der Teilchengrössen, wie sie mittels einer analytischen Ultrazentrifuge entsprechend der Methode von W. Scholtan und H. Lange, Kolloid-Z. und Z.-Polymere 250 (1972), Seiten 782–796, bestimmt werden. Die Ultrazentrifugenmessung liefert die integrale Massenverteilung des Teilchendurchmessers einer Probe. Hieraus lässt sich entnehmen, wieviel Gewichtsprozent der Teilchen einen Durchmesser gleich oder kleiner einer bestimmten Grösse haben. Der mittlere Teilchendurchmesser, der auch als $d_{50}$-Wert der integralen Massenverteilung bezeichnet wird, ist dabei als der Teilchendurchmesser definiert, bei dem 50 Gewichtsprozent der Teilchen einen kleineren Durchmesser haben als der Durchmesser, der dem $d_{50}$-Wert entspricht. Ebenso haben dann 50 Gew.% der Teilchen einen grösseren Durchmesser als der $d_{50}$-Wert. Zur Charakterisierung der Breite der Teilchengrössenverteilung der Kautschukteilchen werden neben dem $d_{50}$-Wert (mittlerer Teilchendurchmesser) die sich aus der integralen Massenverteilung ergebenden $d_{10}$- und $d_{90}$-Werte herangezogen. Der $d_{10}$- bzw. $d_{90}$-Wert der integralen Massenverteilung ist dabei entsprechend dem $d_{50}$-Wert definiert mit dem Unterschied, dass sie auf 10 bzw. 90 Gew.% der Teilchen bezogen sind. Der Quotient

$$\frac{d_{90} - d_{10}}{d_{50}} = Q$$

stellt ein Mass für die Verteilungsbreite der Teilchengrösse dar.

5. Die Fliessfähigkeit wurde analog DIN 53 735 bei einer Temperatur von 260 °C und einer Belastung von 5 Newton in (g/10 min) gemessen.

Zur Durchführung der Beispiele und von Vergleichsversuchen wurden die nachstehend beschriebenen Produkte verwendet:

Als Komponente A) wurde ein Polycarbonat auf der Basis von 2,2-Bis-(4-hydroxiphenyl)propan mit einer Grenzviskosität von 0,52 [dl/g] (gemessen bei 25 °C in Methylenchlorid) eingesetzt.

Als Komponente B-1) wurde folgendes Pfropfmischpolymerisat verwendet: 45 Gew.%, bezogen auf B-1 Pfropfmischpolymerisat (Komponente $b_1b_2$ gemäss Anspruch), bei dem auf 60 Gewichtsteile eines Polybutadienkautschuks (Komponente $b_1$ gemäss Anspruch) mit einer mittleren Teilchengrösse ($d_{50}$ der integralen Massenverteilung) von 0,3 µm 40 Gewichtsteile einer Mischung aus Styrol/Acrylnitril (Komponente $b_2$ gemäss Anspruch) im Gewichtsverhältnis 70:30 aufgepfropft sind und mit 55 Gew.%, bezogen auf B-1, eines Styrol/Acrylnitrilcopolymerisates (Komponente $b_3$ gemäss Anspruch) mit einem Acrylnitrilanteil von 35 Gew.% und einer Viskositätszahl von 80 ml/g sowie zusätzlich 0,2 Teilen eines sterisch gehinderten Phenols (Rütenol®) gemischt wird.

Als Komponente B-2) wurde folgendes Pfropfmischpolymerisat eingesetzt; 50 Gew.%, bezogen auf B-2, Pfropfmischpolymerisat bei dem auf 60 Gewichtsteile eines teilweise vernetzten Polybutylacrylatkautschuks ($b_1$) mit einer mittleren Teilchengrösse ($d_{50}$-Wert der integralen Masseverteilung) von 0,4 µm 13 Gewichtsteile Styrol ($b_2a_1$) und 27 Gewichtsteile ($b_2a_2$) einer Mischung aus Styrol/Acrylnitril im Gewichtsverhältnis 70:30 aufgepfropft sind. Dieses Pfropfmischpolymerisat ($b_1b_2$) wird mit 50 Gew.%, bezogen auf B-2, einem Styrol/Acrylnitril-Copolymerisat ($b_3$) mit einem Acrylnitrilanteil von 35 Gew.% und zusätzlich 0,2 Teilen eines ster. gehinderten Phenols (Rütenol®) gemischt.

Als Komponente D) wurden Pluriole eingesetzt. Zur Kennzeichnung folgt dem Namen sowohl ein Buchstabe als auch eine Zahl. Der Buchstabe E bedeutet, dass es sich um ein Polyethylenoxidpolymeres handelt, P bedeutet ein Polypropylenoxidpolymeres. Die Zahl bezeichnet die mittlere relative Molekülmasse.

Weitere Komponenten D waren Krytox, ein perfluoriertes Polyethylenoxid sowie Fomblin YR und Galden HS, perfluorierte Propylenmethylenoxidzweiblockpolymere.

Beispiele und Vergleichsversuche

Beispiele und Vergleichsversuche 1 bis 11

Die in den Tabellen 1 und 2 angegebenen Gewichtsteile der Komponenten A, B-1, B-2 und D, wurden in trockener Form gemischt, auf einem Extruder bei 260 °C aufgeschmolzen, geknetet und anschliessend granuliert. Aus dem Granulat wurden Proben für Formmassen hergestellt, an denen die in den Tabellen 1 und 2 aufgeführten Eigenschaften bestimmt wurden.

Tabelle 1

| | A Teile | B-1 Teile | D Gew.% | Bezeichnung | Bindefestigkeit [kJ/m²] | Entformungskraft [N] | Fliessfähigkeit [g/10 min] |
|---|---|---|---|---|---|---|---|
| Vergleichsversuch | | | | | | | |
| 1 | 100 | – | | | 67 | 720 | 6 |
| 2 | – | 100 | – | | 20 | 410 | 0,5 |
| 3 | 60 | 40 | – | | 6 | 720 | 10 |
| 4 | 40 | 60 | – | | 6 | 650 | 6 |
| Beispiel | | | | | | | |
| 1 | 60 | 40 | 1 | Pluriol E 600 | 14 | 290 | 25 |
| 2 | 60 | 40 | 1 | Pluriol E 6000 | 12 | 340 | 14 |
| 4 | 60 | 40 | 1 | Pluriol P 900 | 13 | 300 | 17 |
| 5 | 60 | 40 | 1 | Pluriol P 2000 | 11 | 390 | 13 |
| 6 | 60 | 40 | 0,5 | Krytox 1618 | 13 | 400 | 12 |
| 7 | 60 | 40 | 0,5 | Fomblin YR | 15 | 350 | 14 |

Tabelle 2

| | A Teile | B-2 Teile | D Gew.% | Bezeichnung | Bindefestigkeit [kJ/m²] | Entformungskraft [N] | Fliessfähigkeit [g/10 min] |
|---|---|---|---|---|---|---|---|
| Vergleichsversuch | 60 | 40 | – | | 9 | 650 | 8 |
| Beispiel | | | | | | | |
| 8 | 60 | 40 | 1 | Pluriol E 600 | 15 | 500 | 20 |
| 9 | 60 | 40 | 1 | Pluriol P 900 | 13 | 530 | 12 |
| 10 | 60 | 40 | 0,5 | Fomblin YR | 16 | 450 | 13 |
| 11 | 60 | 40 | 0,3 | Galden HS | 14 | 480 | 11 |

**Patentansprüche**

1. Thermoplastische Formmasse, enthaltend

A) 10 bis 90 Gew.%, bezogen auf A+B, mindestens eines Polycarbonates,

B) 90 bis 10 Gew.%, bezogen auf A+B, mindestens eines Mischpolymerisates, das gebildet wird aus

$b_1$) mindestens einem, gegebenenfalls vernetzten, Elastomeren mit einer Glastemperatur unterhalb 0 °C in einem Anteil von 1 bis 40 Gew.%, bezogen auf B, das aufgebaut ist aus mindestens einem der Monomeren aus der Gruppe der

konjugierten Diene mit 4 bis 5 C-Atomen, der (Meth)acrylsäurealkylester mit 1 bis 8 C-Atomen im Alkylrest, der vinylaromatischen Monomeren mit 6 bis 12 C-Atomen

oder von Ethylen, Propylen und einem nicht konjugierten Dien,

worauf,

$b_2$) 5 bis 40 Gew.%, bezogen auf B, mindestens ein Copolymerisat aufgepfropft ist, das aufgebaut ist aus mindestens einem vinylaromatischen Monomeren und mindestens einem (nichtaromatischen) ethylenisch ungesättigten Monomeren im Gewichtsverhältnis 90:10 bis 60:40 und wobei das Produkt der Pfropfmischpolymerisation eine mittlere Teilchengrösse von 0,200–1,0 µm ($d_{50}$-Wert) der integralen Masseverteilung aufweist,

und

$b_3$) mindestens einem Copolymerisat (Hartmatrix), in einem Anteil von 20 bis 94 Gew.%, bezogen auf B, das besteht aus

50–90 Gew.%, bezogen auf $b_3$), mindestens einem vinylaromatischen Monomeren

und

10–50 Gew.%, bezogen auf $b_3$), mindestens eines (nichtaromatischen) ethylenisch ungesättigten Monomeren

enthaltend gegebenenfalls

C) übliche Zusatzstoffe

dadurch gekennzeichnet, dass die Formmasse zusätzlich wenigstens ein Homopolymerisat D der Formel

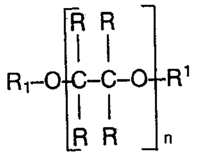 oder

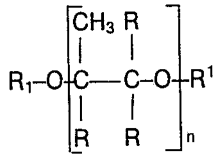

oder Mischungen davon in einem Anteil von 0,1 bis 3,0 Gew.%, bezogen auf A + B, enthält, wobei die Indices und Reste stehen für:

n = Ganze Zahlen von 9 bis 200

R = H, F, Cl

$R_1$ = H oder Alkylrest mit 1–22 C-Atomen.

2. Thermoplastische Formmasse, bestehend aus

A) 30 bis 80 Gew.%, bezogen auf A + B, mindestens eines Polycarbonates,

B) 70 bis 20 Gew.%, bezogen auf A + B, mindestens eines Mischpolymerisates,

das gebildet wird aus

$b_1$) mindestens einem, gegebenenfalls vernetzten, Elastomeren mit einer Glastemperatur unterhalb 0 °C in einem Anteil von 1 bis 40 Gew.-%, bezogen auf B, das aufgebaut ist aus mindestens einem der Monomeren aus der Gruppe der konjugierten Diene mit 4 bis 5 C-Atomen und/oder der Acrylsäurealkylester mit 1 bis 8 C-Atomen im Alkylrest, worauf,

$b_2$) 5 bis 40 Gew.%, bezogen auf B, mindestens ein Copolymerisat aufgepfropft ist, das aufgebaut ist aus mindestens einem vinylaromatischen Monomeren und mindestens einem (nichtaromatischen) ethylenisch ungesättigten Monomeren im Gewichtsverhältnis 90:10 bis 60:40 und wobei das Produkt der Pfropfmischpolymerisation eine mittlere Teilchengrösse von 0,200–1,0 µm ($d_{50}$-Wert) der integralen Masseverteilung aufweist, und

$b_3$) mindestens einem Copolymerisat (Hartmatrix), in einem Anteil von 20 bis 94 Gew.%, bezogen auf B, das besteht aus 50–90 Gew.%, bezogen auf $b_3$), mindestens einem vinylaromatischen Monomeren und 10–50 Gew.%, bezogen auf $b_3$), mindestens eines (nichtaromatischen) ethylenisch ungesättigten Monomeren

enthaltend gegebenenfalls

C) übliche Zusatzstoffe

dadurch gekennzeichnet, dass die Formmasse zusätzlich wenigstens ein Homopolymerisat D der Formel

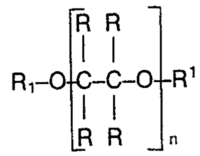 oder

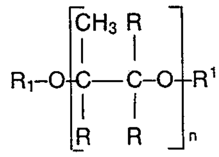

oder Mischungen davon in einem Anteil von 0,1 bis 3,0 Gew.%, bezogen auf A + B, enthält, wobei die Indices und Reste stehen für:

n = Ganze Zahlen von 9 bis 200

R = H, F, Cl

$R_1$ = H oder Alkylrest mit 1–22 C-Atomen.

3. Thermoplastische Formmasse, bestehend aus

A) 30 bis 80 Gew.%, bezogen auf A + B, mindestens eines Polycarbonates,

B) 70 bis 20 Gew.%, bezogen auf A + B, mindestens eines Mischpolymerisates,

das gebildet wird, jeweils bezogen auf B, aus

$b_1$) mindestens einem, gegebenenfalls vernetzten, Elastomeren mit einer Glastemperatur unterhalb 0 °C in einem Anteil von 1 bis 40 Gew.%, bezogen auf B, das aufgebaut ist aus mindestens einem der Monomeren aus der Gruppe der konjugierten Diene mit 4 bis 5 C-Atomen und/oder der Acrylsäurealkylester mit 1 bis 8 C-Atomen im Alkylrest, worauf,

$b_2$) 5 bis 30 Gew.% eines Copolymerisates aufgepfropft sind, das aufgebaut ist aus Styrol und/oder α-Methylstyrol und Acrylnitril im Gewichtsverhältnis 90:10 bis 60:40 und wobei das Produkt der Pfropfmischpolymerisation eine mittlere Teilchengrösse von 0,200–1,0 µm ($d_{50}$-Wert) der integralen Masseverteilung aufweist, und

$b_3$) mindestens einem Copolymerisat (Hartmatrix), in einem Anteil von 40 bis 85 Gew.%, bezogen auf B, das besteht aus 65–80 Gew.%, bezogen auf $b_3$), mindestens einem vinylaromatischen Monomeren und 20–35 Gew.%, bezogen auf $b_3$), mindestens eines (nichtaromatischen) ethylenisch ungesättigten Monomeren

enthaltend gegebenenfalls

C) übliche Zusatzstoffe

dadurch gekennzeichnet, dass die Formmasse zusätzlich wenigstens ein Homopolymerisat D der Formel

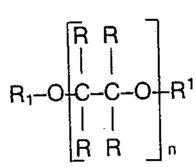 oder

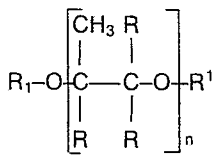

oder Mischungen davon in einem Anteil von 0,1 bis 3,0 Gew.%, bezogen auf A+B, enthält, wobei die Indices und Reste stehen für:

n = Ganze Zahlen von 9 bis 200
R = H, F, Cl
$R_1$ = H oder Alkylrest mit 1–22 C-Atomen.

4. Thermoplastische Formmasse, bestehend aus

A) 40 bis 70 Gew.%, bezogen auf A+B, mindestens eines Polycarbonates,

B) 30 bis 60 Gew.%, bezogen auf A+B, mindestens eines Mischpolymerisates,

das gebildet wird, jeweils bezogen auf B, aus

$b_1$) mindestens einem, gegebenenfalls vernetzten, Elastomeren mit einer Glastemperatur unterhalb 0 °C in einem Anteil von 1 bis 40 Gew.%, bezogen auf B, das aufgebaut ist aus Butadien und/oder Acrylsäurealkylester mit 1 bis 8 C-Atomen im Alkylrest worauf,

$b_2$) 15 bis 25 Gew.% eines Copolymerisates aufgepfropft sind, das aufgebaut ist aus 85 bis 60 Gew.% Styrol und 15 bis 40 Gew.% Acrylnitril und wobei das Produkt der Pfropfmischpolymerisation eine mittlere Teilchengrösse von 0,200–1,0 µm ($d_{50}$-Wert) der integralen Masseverteilung aufweist, und

$b_3$) mindestens einem Copolymerisat (Hartmatrix), in einem Anteil von 50 bis 80 Gew.%, das besteht aus
65–80 Gew.%, bezogen auf $b_3$), Styrol und
35–20 Gew.%, bezogen auf $b_3$), Acrylnitril
enthaltend gegebenenfalls

C) übliche Zusatzstoffe

dadurch gekennzeichnet, dass die Formmasse zusätzlich wenigstens ein Homopolymerisat D der Formel

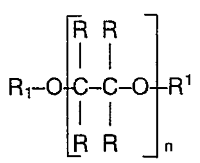

oder

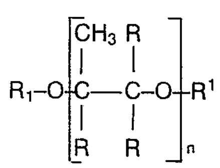

oder Mischungen davon in einem Anteil von 0,1 bis 3,0 Gew.%, bezogen auf A+B, enthält, wobei die Indices und Reste stehen für:

n = Ganze Zahlen von 9 bis 200
R = H, F, Cl
$R_1$ = H oder Alkylrest mit 1–22 C-Atomen.

5. Formmasse nach Anspruch 1, dadurch gekennzeichnet, dass das Homopolymerisat D in einem Anteil von 0,3 bis 1,5 Gew.%, bezogen auf A+B, zugegen ist.

6. Formmasse nach Anspruch 1, dadurch gekennzeichnet, dass das mittlere relative Molekulargewicht des Homopolymerisats D im Bereich von 200 bis 9000 liegt.

7. Verfahren zur Herstellung von Formmassen gemäss Anspruch 1 durch übliches Mischen der Komponenten der Formmasse, gegebenenfalls unter Herstellung von Teilmischungen und Abmischung derselben.

8. Verwendung der Formmasse gemäss Anspruch 1 zur Herstellung von Formteilen.

9. Formteile aus Formmassen gemäss Anspruch 1.

## Claims

1. A thermoplastic molding composition containing

A) from 10 to 90% by weight, based on A+B, of at least one polycarbonate,

B) from 90 to 10% by weight, based on A+B, of at least one copolymer formed from

$b_1$) at least one optionally crosslinked elastomer having a glass transition temperature below 0 °C in a proportion of from 1 to 40% by weight, based on B, built up from at least one monomer from the group consisting of conjugated dienes of 4 or 5 carbon atoms, alkyl (meth)acrylates of from 1 to 8 carbon atoms in the alkyl radical and vinylaromatic monomers of from 6 to 12 carbon atoms or from ethylene, propylene and a nonconjugated diene, onto which there has been grafted

$b_2$) from 5 to 40% by weight, based on B, of at least one copolymer built up from at least one vinyl aromatic monomer and at least one (non-aromatic) ethylenically unsaturated monomer in a weight ratio of from 90:10 to 60:40, the product of the graft copolymerization having an average particle size of 0.200–1.0 µm ($d_{50}$ value) of the cumulative weight distribution, and

$b_3$) at least one copolymer (rigid matrix) in a proportion of from 20 to 94% by weight, based on B, which comprises
50–90% by weight, based on $b_3$), of at least one vinylaromatic monomer and
10–50% by weight, based on $b_3$), of at least one (non-aromatic) ethylenically unsaturated monomer

optionally containing

C) customary additives,

which additionally contains at least one homopolymer D of the formula

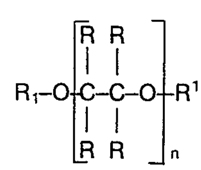

or

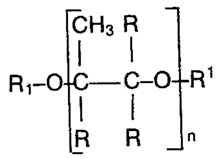

or a mixture thereof in a proportion of from 0.1 to 3.0% by weight, based on A+B, the indices and symbols having the following meanings:

n = an integer from 9 to 200,
R = H, F or Cl and
$R_1$ = H or alkyl of 1–22 carbon atoms.

2. A thermoplastic molding composition comprising

A) from 30 to 80% by weight, based on A+B, of at least one polycarbonate,

B) from 70 to 20% by weight, based on A+B, of at least one copolymer

formed from

$b_1$) at least one optionally crosslinked elastomer having a glass transition temperature below 0°C in a proportion of from 1 to 40% by weight, based on B, which has been built up from at least one monomer from the group consisting of conjugated dienes of 4 or 5 carbon atoms and/or alkyl acrylates having from 1 to 8 carbon atoms in the alkyl radical, onto which there has been grafted

$b_2$) from 5 to 40% by weight, based on B, of at least one copolymer which has been built up from at least one vinylaromatic monomer and at least one (non-aromatic) ethylenically unsaturated monomer in a weight ratio of from 90:10 to 60:40, the product of the graft copolymerization having an average particle size of 0.200–1.0 µm ($d_{50}$ value) of the cumulative weight distribution, and

$b_3$) at least one copolymer (rigid matrix) in a proportion of from 20 to 94% by weight, based on B, which comprises 50–90% by weight, based on $b_3$), of at least one vinylaromatic monomer and 10–50% by weight, based on $b_3$), of at least one (non-aromatic) ethylenically unsaturated monomer

optionally containing

C) customary additives,

which additionally contains at least one homopolymer D of the formula

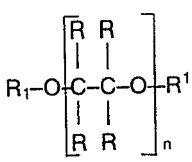

or

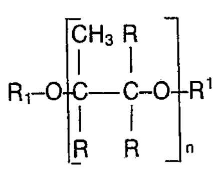

or a mixture thereof in a proportion of from 0.1 to 3.0% by weight, based on A+B, the indices and symbols having the following meanings:

n = an integer from 9 to 200
R = H, F or Cl and
$R_1$ = H or alkyl of 1–22 carbon atoms.

3. A thermoplastic molding composition comprising

A) from 30 to 80% by weight, based on A+B, of at least one polycarbonate,

B) from 70 to 20% by weight, based on A+B, of at least one copolymer

which is formed, in each case based on B, from

$b_1$) at least one optionally crosslinked elastomer having a glass transition temperature below 0°C in a proportion of from 1 to 40% by weight, based on B, which has been built up from at least one monomer from the group consisting of conjugated dienes of 4 or 5 carbon atoms and/or alkyl acrylates having from 1 to 8 carbon atoms in the alkyl radical, onto which there has been grafted

$b_2$) from 5 to 30% by weight of a copolymer which has been built up from styrene and/or α-methylstyrene and acrylonitrile in a weight ratio of from 90:10 to 60:40, the product of the graft copolymerization having an average particle size of 0.200–1.0 µm ($d_{50}$ value) of the cumulative weight distribution, and

$b_3$) at least one copolymer (rigid matrix) in a proportion of from 40 to 85% by weight, based on B, comprising 65–80% by weight, based on $b_3$), of at least one vinylaromatic monomer and 20–35% by weight, based on $b_3$), of at least one (non-aromatic) ethylenically unsaturated monomer

optionally containing

C) customary additives,

which additionally contains at least one homopolymer D of the formula

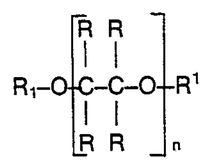

or

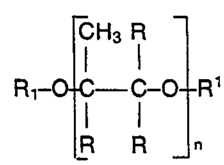

or a mixture thereof in a proportion of from 0.1 to 3.0% by weight, based on A+B, the indices and symbols having the following meanings:

n = an integer from 9 to 200
R = H, F or Cl and
$R_1$ = H or alkyl of 1–22 carbon atoms.

4. A thermoplastic molding composition comprising

A) from 40 to 70% by weight, based on A+B, of at least one polycarbonate,

B) from 30 to 60% by weight, based on A + B, of at least one copolymer
which is formed, in each case based on B, from
$b_1$) at least one optionally crosslinked elastomer having a glass transition temperature below 0 °C in a proportion of from 1 to 40% by weight, based on B, which has been built up from butadiene and/or alkyl acrylate of from 1 to 8 carbon atoms in the alkyl radical
onto which there has been grafted
$b_2$) from 15 to 25% by weight of a copolymer which has been built up from 85 to 60% by weight of styrene and from 15 to 40% by weight of acrylonitrile, the product of the graft copolymerization having an average particle size of 0.200–1.0 µm ($d_{50}$ value) of the cumulative weight distribution, and
$b_3$) at least one copolymer (rigid matrix) in a proportion of from 50 to 80% by weight which comprises
65–80% by weight, based on $b_3$) of styrene and
35–20% by weight, based on $b_3$) of acrylonitrile
optionally containing
C) customary additives,
which additionally contains at least one homopolymer D of the formula

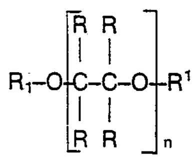

or

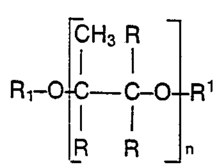

or a mixture thereof in a proportion of from 0.1 to 3.0% by weight, based on A + B, the indices and symbols having the following meanings:
n = an integer from 9 to 200
R = H, F or Cl and
$R_1$ = H or alkyl of 1–22 carbon atoms.

5. A molding composition as claimed in claim 1, wherein the homopolymer D is present in a proportion of from 0.3 to 1.5% by weight, based on A + B.

6. A molding composition as claimed in claim 1, wherein the average relative molecular weight of homopolymer D is within the range from 200 to 9,000.

7. A process for preparing a molding composition as claimed in claim 1 by customary mixing of the components of the molding composition, optionally by preparing contributory mixtures and mixing the same.

8. Use of the molding composition as claimed in claim 1 for producing a molding.

9. A molding from a molding composition as claimed in claim 1.

**Revendications**

1. Masses à mouler thermoplastiques, comprenant
A) 10 à 90% en poids, par rapport à A + B, d'au moins un polycarbonate,
B) 90 à 10% en poids, par rapport à A + B, d'au moins un copolymère,
qui se compose de
$b_1$) au moins un élastomère, éventuellement réticulé, ayant une température de transition vitreuse en dessous de 0 °C, à raison de 1 à 40% en poids par rapport à B, qui est construit à partir d'au moins un des monomères du groupe des diènes conjugués ayant 4 ou 5 atomes de carbone, des esters alkyliques d'acide (méth)acrylique ayant de 1 à 8 atomes de carbone dans le reste alkyle, des monomères vinylaromatiques ayant de 6 à 12 atomes de carbone ou de l'éthylène, le propylène et un diène non conjugué,
sur lequel
$b_2$) est greffé 5 à 40% en poids, par rapport à B, d'au moins un copolymère qui est construit à partir d'au moins un monomère vinylaromatique et d'au moins un monomère à insaturation éthylénique (non aromatique) en proportion pondérale de 90:10 à 60:40, le produit de la copolymérisation par greffage présentant une granulométrie moyenne de 0,200–1,0 µm (valeur $d_{50}$ de la distribution de masse intégrale),
et
$b_3$) au moins un copolymère (matrice dure), à raison de 20 à 94% en poids par rapport à B, qui se compose de
50 à 90% en poids, par rapport à $b_3$), d'au moins un monomère vinylaromatique
et
10 à 50% en poids, par rapport à $b_3$), d'au moins un monomère à insaturation éthylénique (non aromatique),
contenant éventuellement
C) des adjuvants classiques,
caractérisées en ce que la masse à mouler contient en plus au moins un homopolymère D de formule

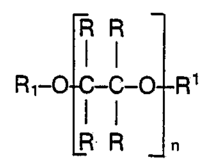

ou

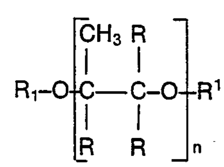

ou un de leurs mélanges à raison de 0,1 à 3% en poids par rapport à A + B, où les indices et les restes sont mis pour

n = nombre entier de 9 à 200
R = H, F, Cl
$R_1$ = H ou reste alkyle de 1 à 22 atomes de carbone.

2. Masses à mouler thermoplastiques, contenant

A) 30 à 80% en poids, par rapport à A+B, d'au moins un polycarbonate,

B) 70 à 20% en poids, par rapport à A+B, d'au moins un copolymère,

qui se compose de

$b_1$) au moins un élastomère, éventuellement réticulé, ayant une température de transition vitreuse inférieure à 0 °C, à raison de 1 à 40% en poids par rapport à B, qui est construit à partir d'au moins un des monomères du groupe des diènes conjugués ayant 4 ou 5 atomes de carbone et/ou esters alkyliques d'acide acrylique ayant de 1 à 8 atomes de carbone dans le reste alkyle,
sur lequel

$b_2$) est greffé 5 à 40% en poids, par rapport à B, d'au moins un copolymère qui est construit à partir d'au moins un monomère vinylaromatique et d'au moins un monomère à insaturation éthylénique (non aromatique) en proportion pondérale de 90:10 à 60:40, le produit de la polymérisation par greffage présentant une granulométrie moyenne de 0,200–1,0 µm ($d_{50}$ de la distribution de masse intégrale),
et

$b_3$) au moins un copolymère (matrice dure), à raison de 20 à 94% en poids par rapport à B, qui se compose de
50 à 90% en poids, par rapport à $b_3$), d'au moins un momomère vinylaromatique
et
10 à 50% en poids, par rapport à $b_3$), d'au moins un monomère à insaturation éthylénique (non aromatique),
contenant éventuellement

C) des adjuvants classiques,

caractérisées en ce que la masse à mouler contient en plus au moins un homopolymère D de formule

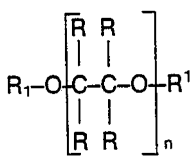

ou

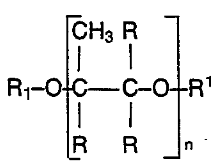

ou un de leurs mélanges, à raison de 0,1 à 3,0% en poids par rapport à A+B, où les indices et restes sont mis pour
n = nombre entier de 9 à 200,
R = H, F, Cl
$R_1$ = H ou reste alkyle de 1 à 22 atomes de carbone.

3. Masses à mouler thermoplastiques, contenant

A) 30 à 80% en poids, par rapport à A+B, d'au moins un polycarbonate,

B) 70 à 20% en poids, par rapport à A+B, d'au moins un copolymère,

qui se compose, à chaque fois par rapport à B, de

$b_1$) au moins un élastomère, éventuellement réticulé, ayant une température de transition vitreuse inférieure à 0 °C, à raison de 1 à 40% en poids par rapport à B, qui est construit à partir d'au moins un des monomères du groupe des diènes conjugués ayant 4 ou 5 atomes de carbone et/ou esters alkyliques d'acide acrylique ayant de 1 à 8 atomes de carbone dans le reste alkyle,
sur lequel

$b_2$) est greffé 5 à 30% en poids d'un copolymère qui est construit à partir de styrène et/ou d'α-méthylstyrène et d'acrylonitrile en proportion pondérale de 90:10 à 60:40, le produit de la copolymérisation par greffage présentant une granulométrie moyenne de 0,200–1,0 µm (valeur $d_{50}$ de la distribution de masse intégrale),
et

$b_3$) au moins un copolymère (matrice dure), à raison de 40 à 85% en poids par rapport à B, qui se compose de
65–80% en poids, par rapport à $b_3$), d'au moins un monomère vinylaromatique
et
20–35% en poids, par rapport à $b_3$), d'au moins un monomère à insaturation éthylénique (non aromatique),
contenant éventuellement

C) des adjuvants classiques,

caractérisées en ce que la masse à mouler contient en plus au moins un homopolymère D de formule

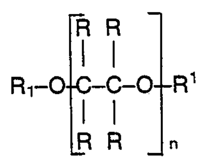

ou

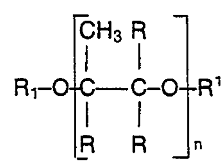

ou un de leurs mélanges, à raison de 0,1 à 3,0% en poids par rapport à A+B, où les indices et les restes sont mis pour
n = nombre entier de 9 à 200
R = H, F, Cl
$R_1$ = H ou reste alkyle de 1 à 22 atomes de carbone.

4. Masses à mouler thermoplastiques, contenant

A) 40 à 70% en poids, par rapport à A+B, d'au moins un polycarbonate,

B) 30 à 60% en poids, par rapport à A+B, d'au moins un copolymère,

qui se compose, à chaque fois par rapport à B, de

$b_1$) au moins un élastomère, éventuellement réticulé, ayant une température de transition vitreuse en dessous de 0 °C, à raison de 1 à 40% en poids par rapport à B, qui est construit à partir de butadiène et/ou des esters alkyliques d'acide acrylique ayant de 1 à 8 atomes de carbone dans le reste alkyle, sur lequel

$b_2$) est greffé 15 à 25% en poids d'un copolymère, qui est construit à partir de 85 à 60% en poids de styrène et de 15 à 40% en poids d'acrylonitrile, le produit de la polymérisation par greffage présentant une granulométrie moyenne de 0,200–1,0 µm (valeur $d_{50}$ de la distribution de masse intégrale),

et

$b_3$) au moins un copolymère (matrice dure), à raison de 50 à 80% en poids,

qui se compose de

65–80% en poids, par rapport à $b_3$), de styrène

et

35–20% en poids, par rapport à $b_3$), d'acrylonitrile contenant éventuellement

C) des adjuvants classiques,

caractérisées en ce que la masse à mouler contient en plus au moins un homopolymère D de formule

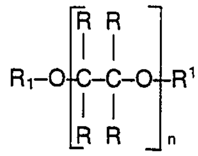

ou

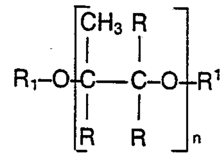

ou un de leurs mélanges, à raison de 0,1 à 3,0% en poids, par rapport à A+B, où les indices et les restes sont mis pour

n = nombre entier de 9 à 200

R = H, F, Cl

$R_1$ = H ou reste alkyle de 1 à 22 atomes de carbone.

5. Masses à mouler selon la revendication 1, caractérisées en ce que l'homopolymère D est présent à raison de 0,3 à 1,5% en poids, par rapport à A+B.

6. Masses à mouler selon la revendication 1, caractérisées en ce que le poids moléculaire relatif moyen de l'homopolymère D est dans la gamme de 200 à 9000.

7. Procédé de préparation de masses à mouler selon la revendication 1, par mélangeage usuel des composants de la masse à mouler, éventuellement avec préparation de mélanges partiels et leur mélangeage.

8. Utilisation des masses à mouler selon la revendication 1, pour la préparation d'articles moulés.

9. Articles moulés obtenus à partir de masses à mouler selon la revendication 1.